# EUROPEAN PATENT APPLICATION

(11) **EP 3 232 034 A1**
(43) Date of publication of application: **18.10.2017**
(21) Application number: 17165002.1
(22) Date of filing: 05.04.2017
(51) Int. Cl.: F02C 7/045, F02C 7/047, F02C 9/18

(54) **INTEGRATED GAS TURBINE INLET SILENCER AND BLEED HEAT SYSTEM**

(30) Priority: 12.04.2016 US 201615096922
(71) Applicant: General Electric Company, Schenectady, NY 12345 (US)
(72) Inventor: MERCHANT, Laxmikant, 560066 Bangalore (IN); ZHANG, Hua, Greenville, SC South Carolina 29615 (US); VENUGOPAL SETTY, Dinesh, 560066 Bangalore (IN); PONYAVIN, Valery Ivanovich, Greenville, SC South Carolina 29615 (US); DEN OUTER, James Frederik, Greenville, SC South Carolina 29615 (US)
(74) Representative: Lee, Brenda

(57) **Abstract**

An inlet system for a gas turbine includes an integrated inlet bleed heat system, wherein the inlet bleed design is integrated in, e.g., a silencer or inlet. A silencer section (90) is arranged within an inlet air duct and includes a plurality of baffles. An inlet bleed heat system (95) is arranged to inject a bleed flow into the air duct through an orifice in a baffle within the silencer section.

## Description

### BACKGROUND OF INVENTION

The subject matter disclosed herein relates to an inlet bleed heat system (IBH).

Gas turbine engines operate to produce mechanical work or thrust. A gas turbine engine comprises an inlet that directs air to a compressor section, which has stages of rotating compressor blades. As the air passes through the compressor, the pressure of the air may increase.

The compressed air is then directed into one or more combustors where fuel is injected into the compressor air and the mixture is ignited. Hot combustion gases are then directed from the combustion section to a turbine section by a transition duct. The hot combustion gases cause the stages of the turbine to rotate, which, in turn, causes the compressor to rotate.

During turbine operations, a turbine pressure ratio may increase until it reaches an operating pressure ratio limit of the associated compressor. Reaching the operating pressure ratio limit may cause a compressor surge. The compressor pressure ratio may be larger than a turbine pressure ratio due to pressure losses across the combustor.

Compressor pressure ratio protection typically involves bleeding and recirculating discharge air to a compressor inlet. The recirculation of discharge air is known as inlet bleed heat (IBH) control. IBH control may also raise the temperature of the compressor inlet by mixing cooler ambient air with the bleed portion of the hot compressor discharge air. The discharge air may be redirected from an output side of the compressor or a combustion section of the turbine to the inlet of the compressor.

Conventionally, to maintain compressor inlet temperatures within a small range, a large number of manifolds are arranged between the bleed air and the compressor inlet. The manifolds may be arranged vertically or horizontally, with many conventionally being arranged vertically.

The inlet of the gas turbine engine can also include heating devices and noise reduction devices. Specifically, heating devices can include injection devices capable of injecting the heated air (the discharge air) into the inlet. Noise reduction systems may also include a plurality of baffles that reduce noise generated by a passing inlet air stream.

### BRIEF DESCRIPTION OF INVENTION

Existing gas turbine systems featuring IBH have certain disadvantages.

U.S. Patent Application Publication No. 2009/0241552 to Vega et al. ("Vega") discloses a gas turbine engine with an inlet bleed heat system. The system of Vega utilizes a supply conduit traversing a housing for an inlet of air provided to a gas turbine engine. The supply conduit comprises a plurality of feed tubes projecting perpendicularly from the supply conduit and also traverse the housing, each of the plurality of feed tubes comprising a plurality of injection orifices. The orifices are arranged to project heated compressed air into the inlet flow as is passes through the housing. This system has certain disadvantages. A first disadvantage is that a longer duct length is required to provide adequate mixing of the inlet bleed heat. A second disadvantage is that the arrangement of the injection orifices results in excessive noise. A third disadvantage is that the arrangement of the feed tubes requires an excessive number of feed tubes, which results in high costs and complexity of the system.

U.S. Patent Application No. 2013/0115061 to Ponyavin et al. ("Ponyavin") discloses another gas turbine engine with an inlet bleed heat system. The system of Ponyavin utilizes two conduits positioned close to a downstream end of a silencer section of an inlet system. The two conduits traverse the pathway of inlet air brought into a compressor from outside the system, with the conduits located in a second end portion of a plenum within the inlet system. Ponyavin suffers from similar disadvantages as Vega and other available systems.

In one exemplary but non-limiting aspect, the present disclosure relates to an inlet system for a gas turbine. The system comprises an inlet air duct; a silencer section arranged within the inlet air duct; and an inlet bleed heat system arranged to inject a bleed flow into the air duct through an orifice in a baffle within the silencer section. In another exemplary but non-limiting aspect, the present disclosure relates to a power plant. The power plant comprises a gas turbine that includes a compressor, a combustion system, and a turbine section; a mechanical or electrical load; and an inlet system for the gas turbine. The inlet system comprises an inlet air duct; a silencer section including a plurality of baffles disposed therein; and an inlet bleed system configured to inject a bleed flow into the air duct through an orifice in a baffle within the silencer section.

### BRIEF DESCRIPTION OF THE DRAWINGS

FIG. 1 is a simplified side elevation of a known inlet system for a gas engine turbine;
FIG. 2 is a perspective view of another known silencer and inlet bleed heat system;
FIG. 3(a) is an enlarged detail taken from Figure 1 with an inlet bleed heat system arranged downstream of a silencer;
FIG. 3(b) is an enlarged detail taken from Figure 1 with an inlet bleed heat system arranged upstream of a silencer;
FIG. 4(a) illustrates a partial, horizontal cross section of the silencer and inlet bleed system of Figure 2;
FIG. 4(b) illustrates a partial, horizontal cross section of a silencer and inlet bleed system similar to that found in Figure 2 with the inlet bleed system arranged downstream of the silencer;
FIG. 5(a) illustrates a schematic relationship between a silencer and inlet bleed heat conduit with the inlet bleed heat conduit being positioned upstream of the silencer;
FIG. 5(b)illustrates a schematic relationship between a silencer and inlet bleed heat conduit with the inlet bleed heat conduit being positioned downstream of the silencer;
FIG. 6(a) illustrates an isometric view of the components of Figure 5(a);
FIG. 6(b) illustrates an isometric view of the components of Figure 5(b);
FIG. 7(a) illustrates a perspective view of an inlet bleed heat system utilizing a set of piccolo pipes;
FIG. 7(b) illustrates a perspective view of an inlet bleed heat system utilizing a two pipe IBH system;
FIG. 7(c) illustrates a perspective view of an inlet bleed heat system utilizing an acoustically treated nozzle;
FIG. 7(d) illustrates a cross sectional view of the acoustically treated nozzle of Figure 7(c);
FIG. 8(a) illustrates a perspective view of an inlet system for gas turbine engine in accordance with an exemplary but non-limiting aspect of the disclosure;
FIG. 8(b) illustrates an enlarged detail taken from Figure 8(a);
FIG. 8(c) illustrates a perspective view of the enlarged detail of Figure 8(b);
FIG. 8(d) illustrates an enlarged detail taken from Figure 8(c);
FIG. 9 illustrates a perspective view of the enlarged detail of Figure 8(d) with airflow indicated; and
FIG. 10 illustrates a cross section of Figure 9 with airflow indicated.

### DETAILED DESCRIPTION OF THE INVENTION

One or more specific embodiments of the present disclosure will be described below. In an effort to provide a concise description of these embodiments, all features of an actual implementation may not be described in the specification. It should be appreciated that in the development of any such actual implementation, as in an engineering or design project, numerous implementation-specific decisions are made to achieve the specific goals, such as compliance with system-related and/or business-related constraints, which may vary from one implementation to another. Moreover, it should be appreciated that such effort might be complex and time consuming, but would nevertheless be a routine undertaking of design, fabrication, and manufacture for those of ordinary skill having the benefit of this disclosure.

Detailed example embodiments are disclosed herein. However, specific structural and functional details disclosed herein are merely representative for purposes of describing example embodiments. Embodiments of the present disclosure may, however, be embodied in many alternate forms, and should not be construed as limited to only the embodiments set forth herein.

Accordingly, while example embodiments are capable of various modifications and alternative forms, embodiments thereof are illustrated by way of example in the figures and will herein be described in detail. It should be understood, however, that there is no intent to limit example embodiments to the particular forms disclosed, but to the contrary, example embodiments are to cover all modifications, equivalents, and alternatives falling within the scope of the present disclosure.

The terminology used herein is for describing particular embodiments only and is not intended to be limiting of example embodiments. As used herein, the singular forms "a", "an" and "the" are intended to include the plural forms as well, unless the context clearly indicates otherwise. The terms "comprises", "comprising", "includes" and/or "including", when used herein, specify the presence of stated features, integers, steps, operations, elements, and/or components, but do not preclude the presence or addition of one or more other features, integers, steps, operations, elements, components, and/or groups thereof.

Although the terms first, second, primary, secondary, etc. may be used herein to describe various elements, these elements should not be limited by these terms. These terms are only used to distinguish one element from another. For example, but not limiting to, a first element could be termed a second element, and, similarly, a second element could be termed a first element, without departing from the scope of example embodiments. As used herein, the term "and/or" includes any, and all, combinations of one or more of the associated listed items.

Certain terminology may be used herein for the convenience of the reader only and is not to be taken as a limitation on the scope of the invention. For example, words such as "upper", "lower", "left", "right", "front", "rear", "top", "bottom", "horizontal", "vertical", "upstream", "downstream", "fore", "aft", and the like; merely describe the configuration shown in the figures. Indeed, the element or elements of an embodiment of the present disclosure may be oriented in any direction and the terminology, therefore, should be understood as encompassing such variations unless specified otherwise.

As used throughout the specification and claims, "substantially" includes at least deviations from ideal or nominal values that are within manufacturing and/or inspection tolerances.

The present disclosure may be applied to the variety of combustion turbine engines that compress an ingested air, such as, but not limiting of, a heavy-duty gas turbine; an aero-derivative gas turbine; or the like. An embodiment of the present disclosure may be applied to either a single combustion turbine engine or a plurality of combustion turbine engines. An embodiment of the present disclosure may be applied to a combustion turbine engine operating in a simple cycle or combined cycle.

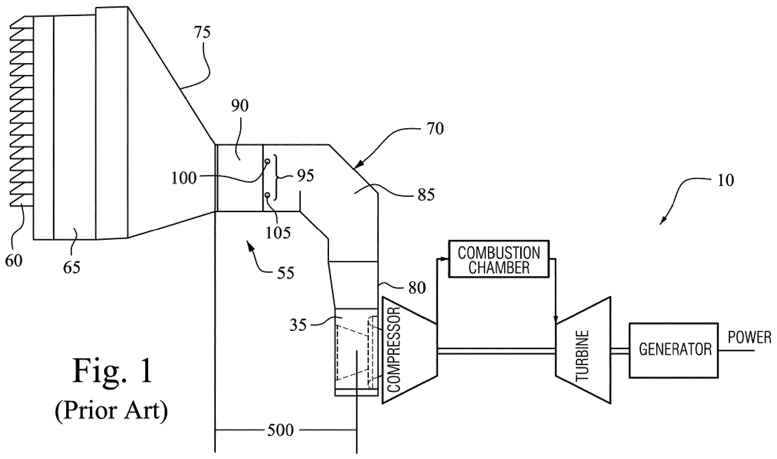

FIG. 1 illustrates a prior art system with a combustion turbine engine 10, an inlet system 55 and an inlet bleed heat system (IBH system) 95.

The combustion turbine engine 10 generally comprises a compressor and a turbine section. The compressor includes a compressor inlet. The compressor inlet may include a plurality of inlet guide vanes (IGVs) arranged downstream of an inlet plenum 35. The combustion turbine engine 10 also generally includes a turbine section fluidly connected to an exhaust diffuser (not shown).

The inlet system 55 generally comprises a weather hood 60 mounted to an upstream end of an inlet filter house 65. The weather hood 60 is fluidly connected to inlet plenum 35 via an inlet air duct 70. Inlet air duct 70 includes a first end portion 75 that extends to a second end portion 80 through an intermediate portion 85. The first end portion 75 may be orientated in a direction substantially parallel to a centerline of the compressor and defines an inlet for receiving ambient air. The second end portion 80 may be orientated in a direction substantially perpendicular to a centerline of the compressor and defines an outlet of the duct 70 that directs the ambient air towards the compressor inlet.

The inlet system 55 also includes an inlet silencer 90 arranged downstream from inlet filter house 65 and an IBH system 95 arranged downstream from inlet silencer 90. The second end portion 80 of the duct 70 is fluidly connected to the diffuser and compressor inlet, both of which are adjacent to the inlet air duct 70.

The IBH system 95 includes first and second conduits 100, 105 that establish vertical curtains of heated air within the inlet air duct 70. The first and second conduits 100 and 105 may be fluidly connected to an extraction manifold in the combustion turbine engine 10 via an IBH delivery conduit (not illustrated). The conduit includes associated piping that fluidly connects the extraction manifold to the first and second conduits 100, 105.

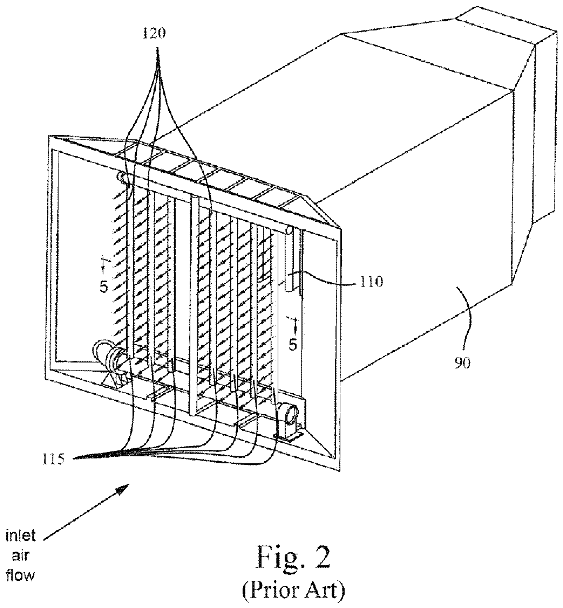

FIG. 2 illustrates a configuration according to U.S. Patent Application Publication No. 2009/0241552. In this configuration, a plurality of IBH conduits 115 are each aligned with and upstream of a plurality of vertically-oriented and laterally-spaced silencer panels 110. Each of the IBH conduits 105 has a plurality of orifices 120 that are oriented to inject inlet bleed heat counter or upstream with respect to a flow direction of inlet air.

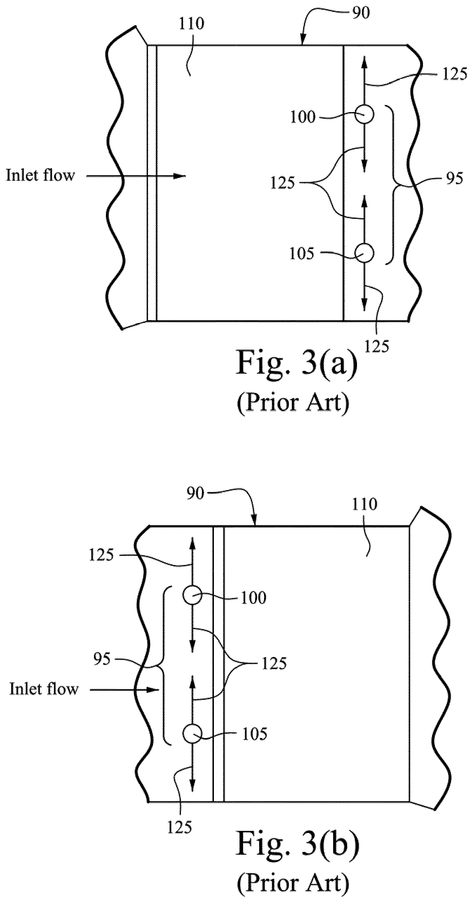

FIG. 3(a) illustrates the silencer 90 and inlet bleed heat system 95 of FIG. 1 in greater detail where a vertically-oriented silencer panel 110 is illustrated from a side view. IBH jets 125 exit from the first conduit 100 and second conduit 105 in a direction substantially perpendicular to a direction of air inlet flow. The IBH jets 125 are formed by orifices (not visible) in the first and second conduits 100, 105. Conduits 100, 105 in Figure 3(a) are arranged downstream of silencer 90. Figure 3(b) provides a similar illustration to Figure 3 (a), but with IBH conduits 100, 105 arranged upstream of silencer 90.

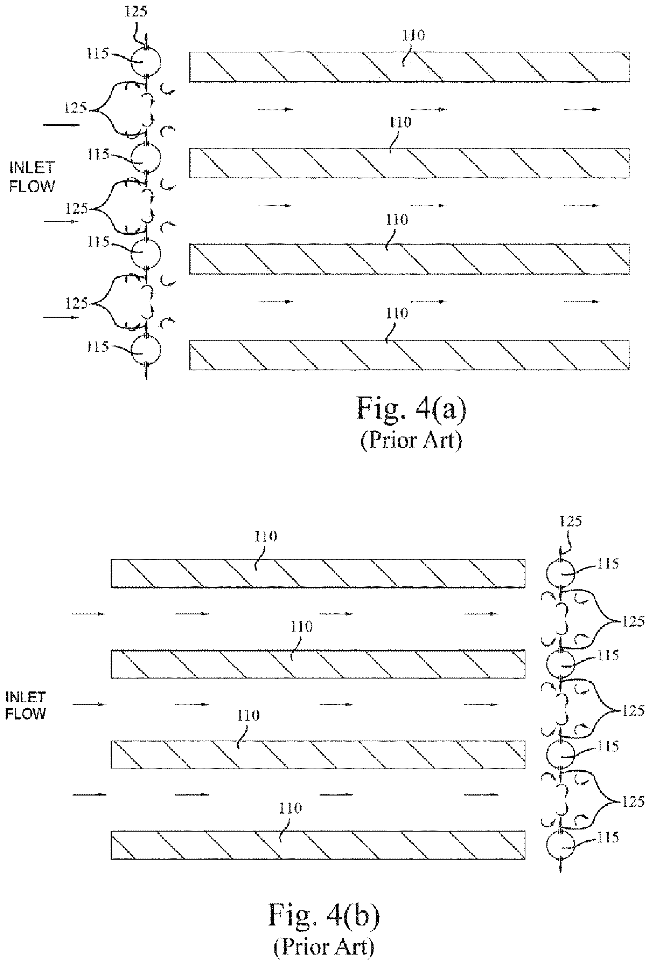

FIG. 4(a) illustrates a cross sectional view of Figure 2. FIG. 4(a) readily illustrates the alignment between the IBH conduits 115 and silencer panels 110. Because of this relative alignment, the IBH conduits 115 are located in a zone of relatively low inlet air flow velocity. The inlet air flow will have a flow velocity at or near zero at the leading edges of the silencer panels 110 and the IBH conduits 115. A maximum inlet air flow velocity and/or maximum turbulence will be achieved somewhere between the silencer panels 110 because the flow area is restricted. Accordingly, the minimum inlet air flow velocity is achieved upstream (to the left in FIG. 4(a)) of the IBH conduits 115.

The configuration of Figure 4(a) has several drawbacks. First, the IBH jets 125 exiting from the orifices 120 are being injected into an area that has the lowest relative inlet air velocity of this portion of the system. Thus, this configuration results in the IBH jets 125 flowing upstream the maximum possible distance before the inlet air flow causes the IBH jets 125 to reverse flow, mix with the inlet air stream and flow through between the silencer panels 110. Second, when the IBH jets 125 exit the orifices 120 at sonic velocity, there is nothing to dampen the sound. This results in undesirable noise caused by the IBH jets 125. Third, there is a one to one correlation between the IBH conduits 115 and the silencer panels 110, which results in high cost and complexity of the system.

Figure 4(b) illustrates another configuration of U.S. Patent Application Publication No. 2009/0241552. This configuration is similar to that illustrated in FIG. 4(a), except that the IBH conduits 115 are located downstream relative to the silencer panels 110 and the orifices 120 are oriented so that the IBH jets 125 are initially perpendicular to the inlet air flow direction.

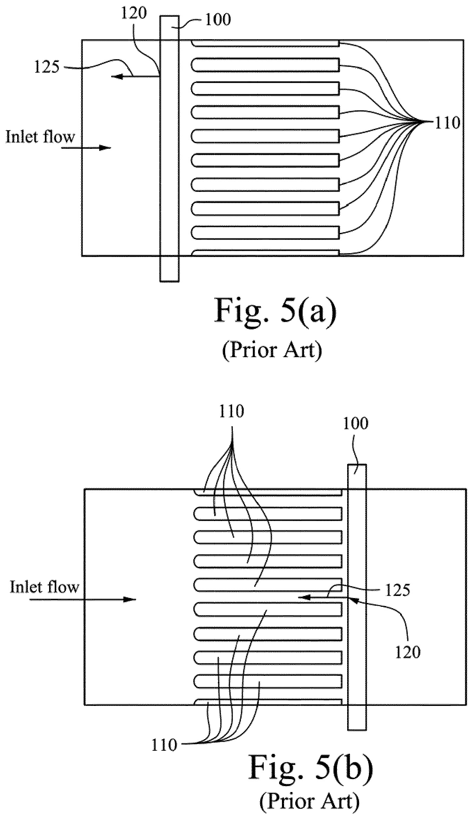

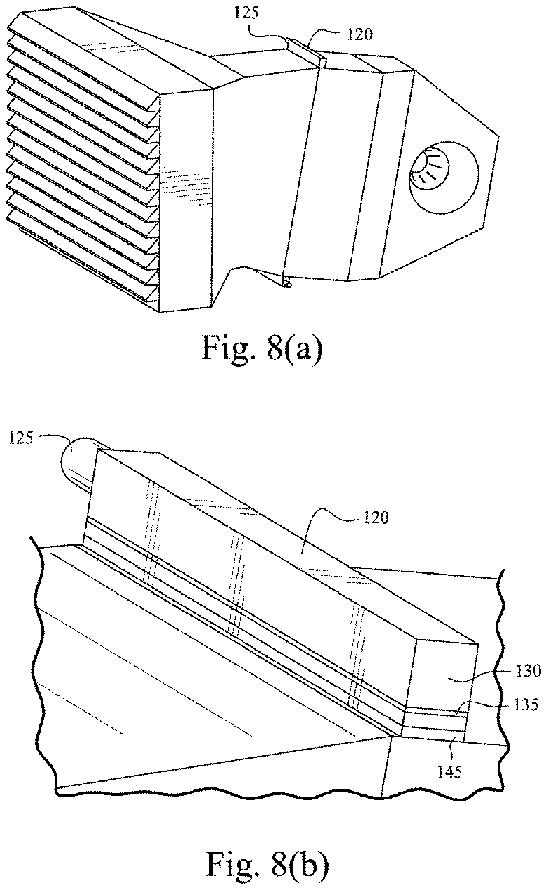

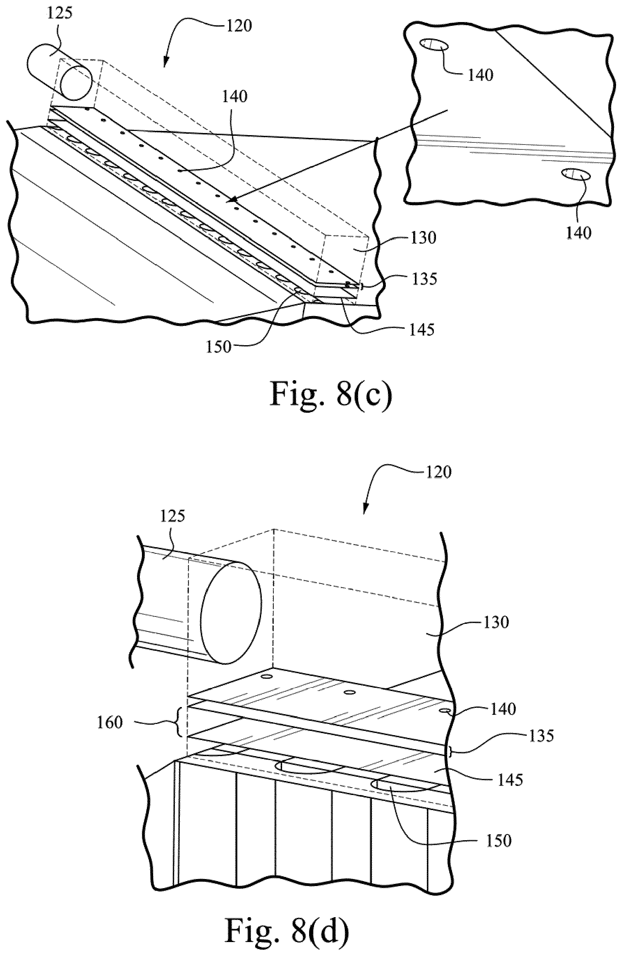

FIG. 5(a) is a simplified view taken from a direction of an edge of the silencer panels 110, perpendicular to the inlet air flow direction and perpendicular to the first conduit 100 (only the first conduit 100 is illustrated, but the second conduit 105 and other conduits could be provided). In this view, only one IBH jet 125 and one orifice 120 are illustrated for simplicity. FIG. 8 illustrates how the orifice 120 is substantially aligned with a center of the space between two adjacent silencer panels 110. This configuration results in the IBH jet 125 being injected into an air gap between the panels 110 that has an area of maximum velocity (at least locally) of the inlet air. Even though the orifice 120 is located downstream of the silencer panels 110, the IBH jet 125 exits at or near sonic velocity and travels upstream to be injected into the area between the silencer panels, where the two flows begin to mix and the inlet bleed heat eventually reverses flow and because indistinguishable from the inlet air flow. An advantage that may be realized in the practice of some embodiments of the described systems and techniques is that the inlet bleed heat is injected into an area of maximum velocity and/or turbulence, which results in improved mixing relative to some prior art.

FIG. 5(b) shows another configuration similar to Figure 5(a). Here, the first conduit 100 is located upstream relative to a leading edge of the silencer panels 110. Similar to the configurations illustrated above, the orifices 120 (only one illustrated for simplicity) is located substantially midway between two silencer panels 110 to take advantage of the relatively high velocity generated between the silencer panels 110.

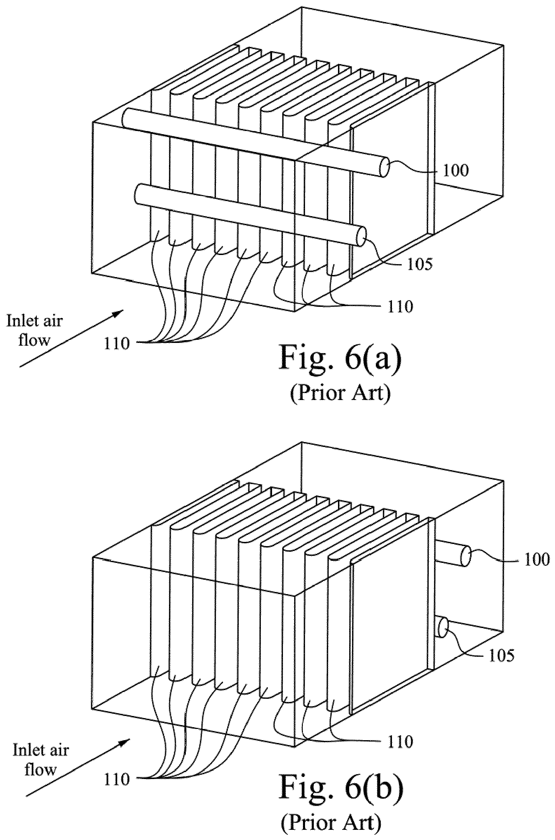

FIG. 6(a) is an isometric view of the system shown in Figure 5(a). Figure 6(b) is an isometric view of the system shown in Figure 5(b).

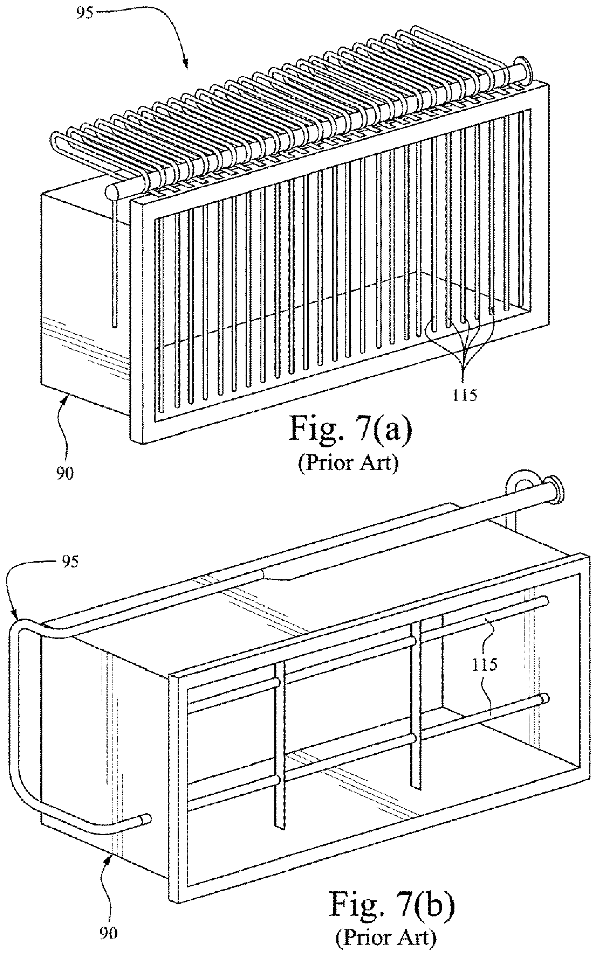

FIG. 7(a) is a perspective view of an inlet bleed heat system 95 utilizing a piccolo pipes configuration as a system to provide inlet bleed heat air to an inlet system for a turbine. The piccolo pipes comprise a plurality of pipes 115 which traverse the flow path of inlet air entering the turbine system. The piccolo pipes configuration is conventionally placed downstream of a silencer section 90.

FIG. 7(b) is a perspective view of an inlet bleed heat system 95 utilizing a two pipe IBH configuration as a system to provide inlet bleed heat air to an inlet system for a turbine. The two pipes 115 traverse the flow path of inlet air entering the turbine system. The two pipe IBH configuration is conventionally placed downstream of a silencer section 90.

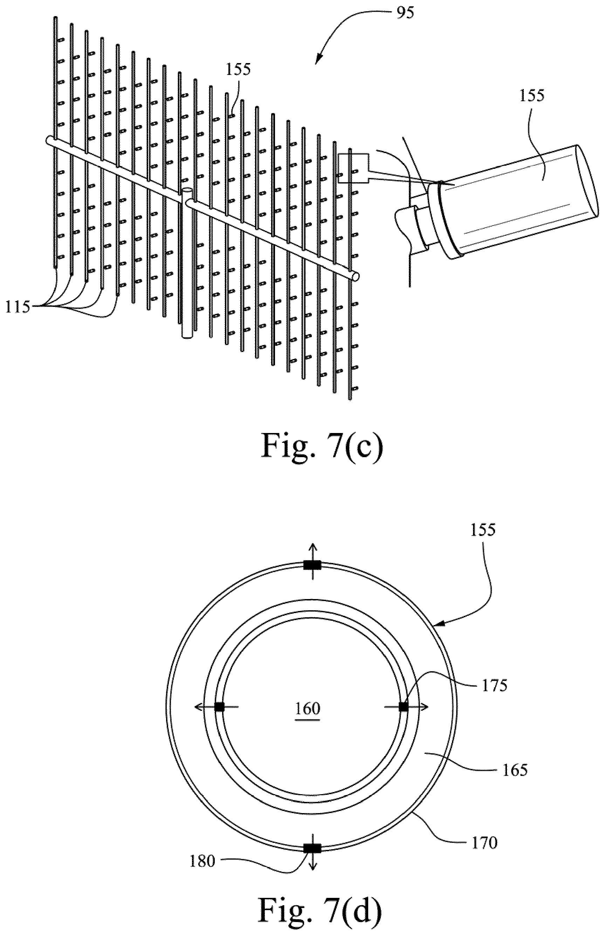

Figure 7(c) is a schematic view of a set of acoustically treated nozzles 155. Acoustically treated nozzles 155 may be incorporated into a set of pipes 115 traversing the flow path of inlet air entering the turbine system. Acoustically treated nozzles 155 are a costly option which may be placed upstream of a silencer section.

Figure 7(d) is a cross sectional view of a set of acoustically treated nozzles 155 like those of Figure 7(c). As illustrated, acoustically treated nozzles feature a central hollow tube 160 surrounded by a layer of wire mesh 165 surrounded by an outer tube 170. Inlet bleed heat air passes through the thickness of the tubes through inner outlet 175 into the mesh 165 before passing through outer outlet 180 and entering the inlet air stream for the turbine.

FIG. 8(a) illustrates a system in accordance with the present disclosure. Figure 8(a) illustrates an inlet air duct section similar schematically to Figure 1, but with an integrated IBH silencer system. In Figure 8(a), an IBH feed pipe feeds inlet bleed heat air into an IBH plenum 120 arranged outside of the inlet air duct system, and in particular, may be arranged outside a silencer duct in the inlet air duct system. The IBH plenum and its arrangement (described in detail below) allow for the introduction of inlet bleed heat air without requiring additional piping or hardware installed within the inlet air duct system. Rather than requiring additional piping to be disposed within the inlet air duct system to introduce IBH air into an inlet air flow, the structure of the IBH plenum allows IBH air to be introduced using the duct system's existing structures, including the silencer section.

FIG. 8(b) illustrates a perspective enlarged view of the IBH plenum 120. The plenum 120 interfaces with an IBH feed pipe 125 to provide IBH air. The plenum 120 itself comprises an insulated shell and a set of plates at its base. In particular, the plenum 120 comprises an IBH air chamber 130, an orifice plate 135 which may be configured with orifices that are sized for sonic flow, an open region which may be filled with wire mesh, and a perforated plate 145 configured to direct the IBH air flow into a silencer region of the inlet air duct system.

FIG. 8(c) illustrates an internal perspective view of the IBH plenum 120 with the insulated shell rendered transparent. Orifice plate 135 is configured with orifices 140 that are sized for sonic flow. Perforated plate 145 is also provided with orifices, the perforations being arranged to direct IBH air flow towards the silencer components used to introduce IBH air flow into the inlet air duct system. At the surface of the inlet duct to which the plenum 120 is attached, openings 150 are provided for the IBH air flow to enter in inlet air flow duct. In this embodiment, the openings 150 direct IBH air into silencer panels disposed within the silencer section of the inlet air duct system.

FIG. 8(d) illustrates an enlarged view of a section of Figure 8(c) at the intersection between IBH feed pipe and the IBH plenum 120. In Figure 8(d), an enlarged view of the arrangement of the space 130 within the insulated shell of the IBH plenum, orifice plate(s) 135, optionally wire mesh filled space, perforated plate 145, and openings 150 to the silencer section of the inlet air flow duct system. In this embodiment, the openings direct IBH air into a leading edge region of silencer panels arranged within the inlet air flow duct's silencer section.

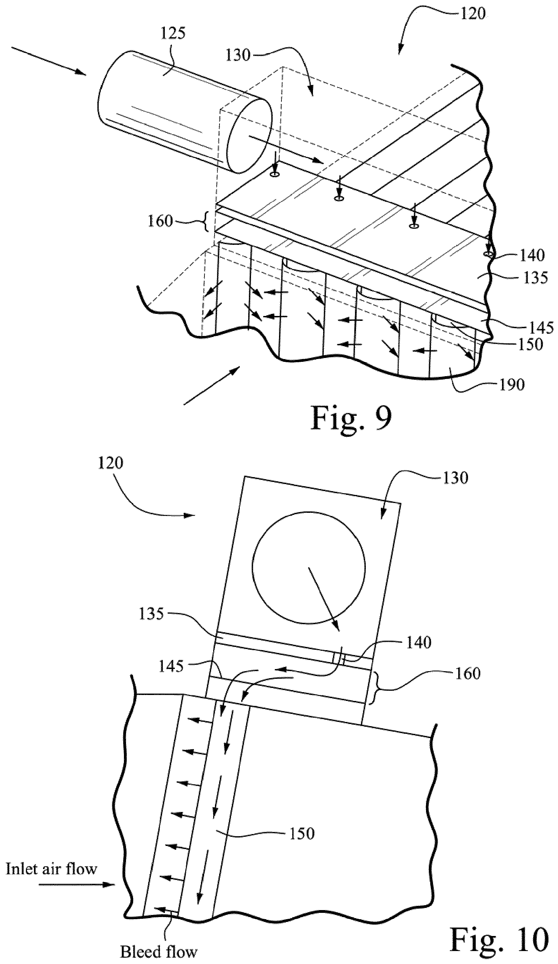

FIG. 9 illustrates an enlarged view of a section of Figure 8(c) similar to Figure 8(d) with airflow indicated in the figure. IBH air flows from the feed pipe into the insulated plenum 120, through sonically designed orifices 140 in orifice plate(s) 135, through a space 160 which may be filled with wire mesh or another material which is chosen to aid with sound dampening, through a perforated plate 145, through openings 150 into the silencer section, and then finally out into the inlet air flow duct system through a final set of perforations, in this case illustrated as being in a leading edge section of silencer panels 190 of the silencer section. The leading edge may be arranged as a bull nose.

FIG. 10 illustrates a cross sectional view of Figure 9 which also indicates airflow as described in Figure 9.

In alternative embodiments, the plenum and associated structures may be arranged to direct the IBH air flow anywhere within existing inlet air duct system structures, and in particular within the structures used for the silencer system. For example, wire mesh is discussed as a sound attenuating material, but other materials may be used to fill space 160.

The configuration of the plenum 120 serves to introduce IBH air into an inlet air duct system while not requiring costly and bulky piping to be installed within the duct system. The IBH system illustrated herein leads to an elimination of IBH piping within the inlet duct while providing an improved thermal flow mixing. The IBH system utilizes multiple orifices, all of which may be sized, configured, and arranged for sonic flow occurrence. The wire mesh layer located downstream of sonic flow orifices is designed to attenuate the noise generated by the sonic flow occurrence.

In the particular embodiment illustrated herein, the IBH air flow may pass through a leading edge or bull nose region of each silencer baffle and enter into the inlet duct through perforations on the leading edge or bull nose of the silencer. The low subsonic bleed injection around the silencer leading edge helps in achieving better thermal flow mixing due to aid from the blockage already created by silencer baffles, as well as the perforated sheets on the silencer outer surface.

In the alternative, perforations providing IBH flow into the inlet air flow for the turbine may be arranged in other sections of the inlet air duct system, with a preference for being arranged on existing silencer components such as the baffles.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

Various aspects and embodiments of the present invention are defined by the following numbered clauses:
1. An inlet system for a gas turbine, the system comprising:
   an inlet air duct;
   a silencer section arranged within the inlet air duct, the silencer section having a plurality of baffles; and
   an inlet bleed heat system arranged to inject a bleed flow into the air duct through an orifice in a baffle within the silencer section.
2. The inlet system according to clause 1, wherein the inlet bleed heat system is arranged to inject the bleed flow into the air duct through an orifice in an upstream portion of the baffle.
3. The inlet system according to any preceding clause, wherein the inlet bleed system is configured to inject the bleed flow into the air duct through an orifice in a leading edge region of the baffle.
4. The inlet system according to any preceding clause, wherein the inlet bleed system utilizes a silencer bull nose to inject the bleed flow into the air duct.
5. The inlet system according to any preceding clause, wherein the bleed flow is configured to be injected at subsonic speed from the leading edge region of the silencer section into the air duct.
6. The inlet system according to any preceding clause, wherein the bleed flow is directed into the inlet air duct such that the bleed flow at least partially opposes an inlet air flow passing through the inlet air duct.
7. The inlet system according to any preceding clause, further comprising an inlet bleed heat plenum arranged outer to and continuous with the silencer section.
8. The inlet system according to any preceding clause, wherein the bleed flow is arranged to pass through the inlet bleed heat plenum and the baffle of the silencer section.
9. The inlet system according to any preceding clause, wherein the inlet bleed heat plenum comprises an orifice plate configured and sized for sonic flow.
10. The inlet system according to any preceding clause, wherein the inlet bleed heat plenum comprises at least a first perforated plate arranged between the orifice plate and the silencer section.
11. The inlet system according to any preceding clause, wherein the orifice plate is spaced from a topmost perforated plate to create an open region therebetween.
12. The inlet system according to any preceding clause, wherein the open region between the orifice plate and the topmost perforated plate is filled with wire mesh.
13. The inlet system according to any preceding clause, wherein the bleed flow is arranged to pass from the inlet bleed heat feed pipe into the inlet bleed heat plenum, through the orifice plate, the wire mesh, and the at least one perforated plate before entering the silencer section.
14. The inlet system according to any preceding clause, wherein the plenum is arranged such that the bleed flow is configured to pass through the bull nose of the silencer section to enter the inlet duct.
15. The inlet system according to any preceding clause, wherein the inlet bleed heat plenum is configured and arranged to be connected to an inlet bleed heat feed pipe.
16. A method for providing inlet air to a compressor in a gas turbine engine, comprising:
   passing inlet air through a duct to the compressor;
   arranging a silencer within the duct through which inlet air passes, the silencer comprising a baffle;
   injecting bleed heat air into the inlet air duct through an inlet bleed heat plenum arranged outer to the silencer;
   passing the bleed heat air from the plenum through the baffle into the duct;
   orienting an orifice in the baffle through which the bleed heat air passes to enter the duct, the orifice being arranged such that the bleed heat air enters the duct at an angle relative to a flow path of the inlet air.
17. The method for providing inlet air according to any preceding clause, further comprising passing bleed heat air through an inlet bleed heat plenum arranged external to the silencer.
18. The method for providing inlet air according to any preceding clause, further comprising arranging an orifice plate, at least a first perforated plate, and wire mesh in a space between the orifice plate and the at least first perforated plate within the plenum.
19. The method for providing inlet air according to any preceding clause, further comprising passing the bleed heat air through the orifice plate, the wire mesh, and the at least first perforated plate before the bleed heat air enters the silencer.
20. The method for providing inlet air according to any preceding clause, further comprising arranging the orifice in the baffle in a leading edge region of the baffle.

## Claims

1. An inlet system for a gas turbine, the system comprising:
an inlet air duct (70);
a silencer section (90) arranged within the inlet air duct, the silencer section having a plurality of baffles; and
an inlet bleed heat system (95) arranged to inject a bleed flow into the air duct through an orifice in a baffle within the silencer section.

2. The inlet system according to claim 1, wherein the inlet bleed heat system (95) is arranged to inject the bleed flow into the air duct (70) through an orifice in an upstream portion of the baffle.

3. The inlet system according to claim 2, wherein the inlet bleed system (95) utilizes a silencer bull nose to inject the bleed flow into the air duct.

4. The inlet system according to claim 1, wherein the inlet bleed system (95) is configured to inject the bleed flow into the air duct (70) through an orifice in a leading edge region of the baffle.

5. The inlet system according to claim 4, wherein the bleed flow is configured to be injected at subsonic speed from the leading edge region of the silencer section (90) into the air duct (70).

6. The inlet system according to claim 5, wherein the bleed flow is directed into the inlet air duct (70) such that the bleed flow at least partially opposes an inlet air flow passing through the inlet air duct.

7. The inlet system according to claim 6, further comprising an inlet bleed heat plenum (120) arranged outer to and continuous with the silencer section (90).

8. The inlet system according to claim 7, wherein the bleed flow is arranged to pass through the inlet bleed heat plenum (120) and the baffle of the silencer section (90).

9. The inlet system according to claim 8, wherein the inlet bleed heat plenum (120) comprises an orifice plate (135) configured and sized for sonic flow.

10. The inlet system according to claim 9, wherein the inlet bleed heat plenum (120) comprises at least a first perforated plate (145) arranged between the orifice plate (135) and the silencer section (90).

11. The inlet system according to claim 10, wherein the orifice plate (135) is spaced from a topmost perforated plate (145) to create an open region therebetween.

12. The inlet system according to claim 11, wherein the open region between the orifice plate (135) and the topmost perforated plate (145) is filled with wire mesh.

13. A method for providing inlet air to a compressor in a gas turbine engine, comprising:
passing inlet air through a duct (70) to the compressor;
arranging a silencer (90) within the duct through which inlet air passes, the silencer comprising a baffle;
injecting bleed heat air into the inlet air duct through an inlet bleed heat plenum (120) arranged outer to the silencer;
passing the bleed heat air from the plenum through the baffle into the duct; and
orienting an orifice in the baffle through which the bleed heat air passes to enter the duct, the orifice being arranged such that the bleed heat air enters the duct at an angle relative to a flow path of the inlet air.

14. The method for providing inlet air according to claim 13, further comprising passing bleed heat air through an inlet bleed heat plenum (120) arranged external to the silencer (90).

15. The method for providing inlet air according to claim 14, further comprising arranging an orifice plate (135), at least a first perforated plate (145), and wire mesh in a space between the orifice plate and the at least first perforated plate within the plenum.
